**Europäisches Patentamt**

**European Patent Office**

**Office européen des brevets**

(19)

(11) Veröffentlichungsnummer : **0 392 085 B1**

(12) **EUROPÄISCHE PATENTSCHRIFT**

(45) Veröffentlichungstag der Patentschrift :
**15.04.92 Patentblatt 92/16**

(21) Anmeldenummer : **89122169.9**

(22) Anmeldetag : **01.12.89**

(51) Int. Cl.⁵ : **G01D 5/34,** G01D 5/38,
B65H 23/02

(54) **Anordnung zur Messung einer Spurabweichung einer bewegbaren Folienbahn.**

(30) Priorität : **12.04.89 CH 1381/89**

(43) Veröffentlichungstag der Anmeldung :
**17.10.90 Patentblatt 90/42**

(45) Bekanntmachung des Hinweises auf die
Patenterteilung :
**15.04.92 Patentblatt 92/16**

(84) Benannte Vertragsstaaten :
**AT CH DE FR GB IT LI NL**

(56) Entgegenhaltungen :
**EP-A- 0 142 129
DE-A- 3 222 629
DE-A- 3 700 777
DE-B- 1 207 640
GB-A- 2 106 642**

(56) Entgegenhaltungen :
**US-A- 3 697 761
US-A- 3 957 378
PATENT ABSTRACTS OF JAPAN, Band 9, Nr.
300 (M-433)[2023], 27. November 1985; & JP-
A-60 137 752 (KAWASAKI) 22-07-1985**

(73) Patentinhaber : **Landis & Gyr Betriebs AG
CH-6301 Zug (CH)**

(72) Erfinder : **Wessner, Michael
Schutzengelstrasse 34i
CH-6340 Baar (CH)**
Erfinder : **Holliger, Daniel
Bahnhofstrasse 1
CH-6312 Steinhausen (CH)**

(74) Vertreter : **Müller, Hans-Jürgen, Dipl.-Ing. et al
Müller, Schupfner & Gauger
Maximilianstrasse 6 Postfach 10 11 61
W-8000 München 1 (DE)**

## Beschreibung

Die Erfindung bezieht sich auf eine Anordnung zur Messung einer Spurabweichung einer bewegbaren Folienbahn der im Oberbegriff des Anspruchs 1 genannten Art.

Solche Messanordnungen werden vorteilhaft beim Schneiden einer geprägten Kunststoffolienbahn auf Umrollschneidemaschinen zum genauen Abtasten der seitlichen Lage der Folienbahn verwendet.

Es sind optische Spursensoren bekannt, die während des Umrollens einer Folienbahn deren seitliche Abweichung von einer vorgeschriebenen Mittenlage mittels optischen Abtastens einer Folienbahnkante laufend messen. Der Spursensor besteht aus einer Lichtquelle mit einer Optik als Sender auf der einen Seite der Folienbahn und einem Detektor als Empfänger auf der anderen Seite. Er bestimmt die Lage der Folienbahnkante, die einen Lichtstrahl des Senders mehr oder weniger stark abdeckt. Der Spursensor übermittelt Empfangssignale zu einer Messeinrichtung, die ein Stellsignal zur Korrektur der Abweichung erzeugt und an Lenkrollen weiterleitet. Mittels der Lenkrollen wird die Folienbahn wieder in die Mittenlage zurückgesteuert. Nachteilig ist die Empfindlichkeit solcher Spursensoren auf Fehler in der Folienbahnkante und auf die Transparenz der Folie.

Aus EP-A-0 142 129 ist eine Einrichtung zur Überwachung und Stewerung einen Folienbahn und zur optischen Abtastung eines Aufveißstreifens der Folie bekannt.

Andererseits sind Spursensoren bekannt, die auf der Folienbahn einer auf graphischem Wege erzeugten Markierspur folgen. Diese optischen Spursensoren bestehen aus einer Beleuchtungseinrichtung als Sender und einem auf der gleichen Seite der Folienbahn angeordneten Empfänger für reflektiertes Licht. Sie stellen die Markierspur durch Unterschiede in der Reflektivität fest. Solche Spurensensoren sind empfindlich auf Intensitätsschwankungen der Beleuchtung und auf Aenderungen in der Reflektivität der Folienbahn und der Markierspur.

Der Erfindung liegt die Aufgabe zugrunde, eine Anordnung zur Messung einer Spurabweichung einer bewegbaren Folienbahn zu schaffen, die mit einfachen Mitteln eine erhöhte Messgenauigkeit aufweist und von Intensitätsschwankungen der Beleuchtung unabhängig ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnungen näher erläutert.

Es zeigt:

Fig. 1 einen Schnitt durch einen Spursensor,

Fig. 2 einen Grundriss zu der Figur 1,

Fig. 3 einen Ausschnitt aus der Figur 2 mit einer Markierspur,

Fig. 4 Empfangsignale des Spursensors als Funktion einer Abweichung y,

Fig. 5 ein aus den Empfangssignalen in der Figur 4 gebildetes Differenzsignal als Funktion der Abweichung y,

Fig. 6 einen Grundriss durch eine Messanordnung mit dem Spursensor und einem Markensensor,

Fig. 7 Empfangsignale des Markensensors als Funktion einer Bahnrichtung,

Fig. 8 ein aus den Empfangssignalen in der Figur 7 gebildetes Differenzsignal als Funktion der Bahnrichtung,

Fig. 9 eine Umrollanlage mit zwei Kombisensoren und

Fig. 10 eine Positioniereinrichtung.

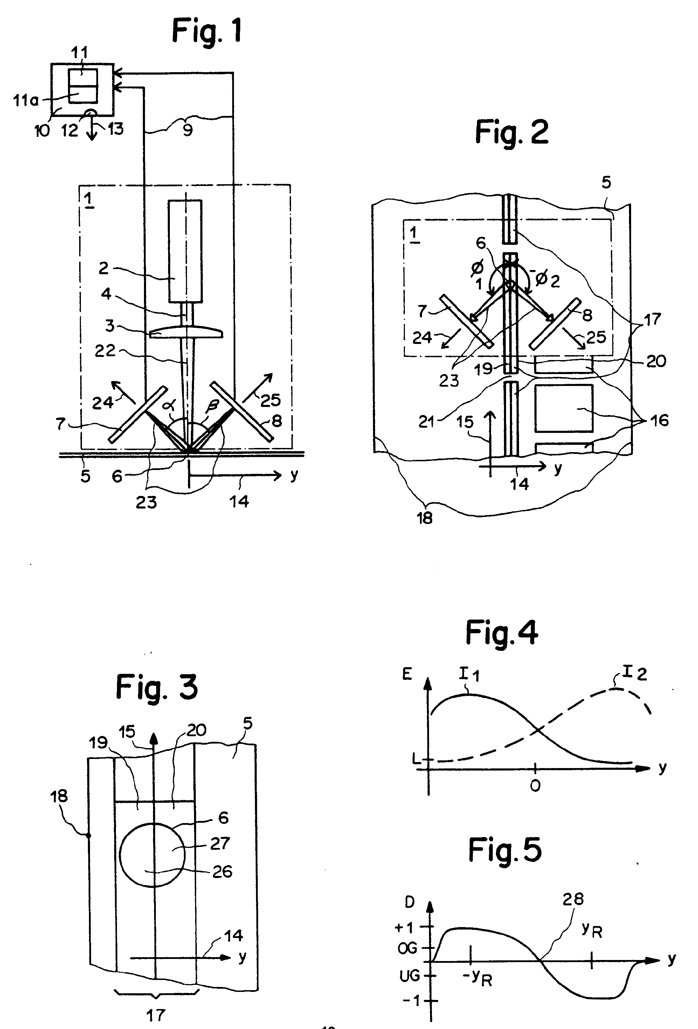

In der Figur 1 bedeutet 1 einen Spursensor, der eine Lichtquelle 2, ein optisches Mittel 3 und einen lichtempfindlichen Empfänger aufweist. Das optische Mittel konzentriert das von der Lichtquelle 2 erzeugte Licht 4 auf einer Folienbahn 5 in einem Fleck 6. Zwei Detektoren 7 und 8 des Empfängers sind über Leitungen 9 mit einer Messeinrichtung 10 verbunden, die eine Recheneinheit 11 mit einem Speicher 11a aufweist und die über einen Ausgang 12 ein Korrektursignal 13 abgibt.

Zum Ausführen einer Folgeoperation wird die Folienbahn 5 auf einer hier nicht gezeigten Umrollanlage von einer Rolle zur anderen umgespult. Eine solche Folgeoperation ist beispielsweise eine Schneidoperation zum längsweisen Zerteilen der Folienbahn 5 in schmale Streifen. Die Folienbahn 5 wird beim Umrollen über hier nicht gezeigte Leitrollen geführt. Mechanische Spannungen in der Folienbahn 5, geringe Abweichungen im Aufbau der Umrollanlage usw. bewirken ein seitliches Auswandern der ablaufenden Folienbahn 5 aus einer idealen Mittenlage, wobei eine Abweichung y in einer Seitenrichtung 14 auftritt. Dieser Versatz der Folienbahn 5 wirkt für die Folgeoperation störend und ist eine Ursache für die Erzeugung von Ausschussware. Eine nachstehend beschriebene Bahnregelung mit einer Messanordnung, die aus dem Spursensor 1 und der Messeinrichtung 10 besteht, reduziert wirksam diesen Versatz.

In der Zeichnung wird beim Umrollen die Folienbahn 5 senkrecht in die Zeichnungsebene hineingezogen. Der Spursensor 1 ist in die Umrollanlage eingebaut und tastet die ihm zugewandte Oberfläche der Folienbahn 5 mit Licht 4 ab. Die Seitenrichtung 14 liegt in der Ebene der Folienbahn 5 und ist senkrecht zu einer Bahnrichtung 15 (Figur 2), die die Bewegungsrichtung beim Umrollen der Folienbahn 5 angibt.

Der Spursensor 1 analysiert das von der Folienbahn 5, die z. B. aus einer dünnen Kunststoffolie mit eingeprägten Mustern 16 besteht, zurückgeworfene Licht und erzeugt in der Messeinrichtung 10 (Figur 1) die von der Abweichung y abhängigen Korrektursignale 13. Eine hier nicht gezeigte, mit dem Ausgang 12 verbundene Steuereinrichtung der Umrollanlage wertet die Korrektursignale 13 aus und regelt mittels verstellbaren Leitrollen die Lage der sich relativ zum Lichtsensor 1 bewegenden Folienbahn 5 derart, dass sich die Folienbahn 5 in der Mittenlage befindet.

In einer anderen Ausführung verschiebt sich der Spursensor 1 zusammen mit hier nicht gezeigten Mitteln der Folgeoperation gegenüber der festgeführten Folienbahn 5.

Zur genauen seitlichen Führung weist die Folienbahn 5 (Figur 2) wenigstens eine gleichzeitig mit den Mustern 16 aufgebrachte Markierspur 17 auf. Die Muster 16 sind entweder durchgehend auf der ganzen Länge der Folienbahn 5 oder wiederholen sich periodisch, wie dies durch den Prägevorgang vorbestimmt ist. Die auf die Folienbahn 5 eingeprägte schmale Markierspur 17 weist zu den Mustern 16 einen vorbestimmten Abstand in der Seitenrichtung 14 auf. Die Markierspur 17 verläuft mit ihrer Längsrichtung kontinuierlich oder in kurzen Sektionen zwischen beiden Kanten 18 der Folienbahn 5. Werden die Muster 16 in mehreren Arbeitsgängen hergestellt, so wird die Markierspur 17 mit Vorteil im ersten Arbeitsgang erzeugt, damit in jeder der Folgeoperationen die Folienbahn 5 mittels der Markierspur 17 ausgerichtet wird.

Die in kurze Sektionen aufgeteilte, diskontinuierliche Markierspur 17 setzt sich in jeder Sektion aus einer ersten rechteckförmigen Beugungsgitterspur 19 und einer zweiten rechteckförmigen Beugungsgitterspur 20 zusammen, die eng benachbart sind und die sich beispielsweise längs einer gemeinsamen Längsseite berühren. In jeder Beugungsgitterspur 19 bzw. 20 ist ein Beugungsgitter mit einem vorbestimmten Reliefprofil eingeprägt. Zwischen den aufeinanderfolgenden Sektionen der Markierspur 17 ist ein kleiner Zwischenraum 21 ohne Prägung vorhanden. Die Länge des Zwischenraumes 21 beträgt vorteilhaft weniger als die Länge einer Sektion.

Die kontinuierliche Markierspur 17 ist nur ein Sonderfall der diskontinuierlichen, da sie nur aus einer einzigen, entsprechend langen Sektion besteht.

Das Beugungsgitter weist in der ersten Beugungsgitterspur 19 einen ersten Azimutwinkel $\Phi_1$, in der zweiten Beugungsgitterspur 20 einen zweiten Azimutwinkel $\Phi_2$ auf, wobei der Azimutwinkel $\Phi_1$ bzw. $\Phi_2$ in bezug auf die Bahnrichtung 15 gemessen wird. Die Gitterfrequenz jedes Beugungsgitters bestimmt je einen Beugungswinkel $\alpha$ bzw. $\beta$ (Figuren 1 und 2), der zwischen einem Strahl 22, den das optische Mittel 3 aus dem Licht 4 erzeugt, und am Beugungsgitter in einer vorbestimmten Ordnung gebeugtem Licht 23 gemessen wird. Die Richtung des am ersten Beugungsgitter gebeugten Lichts 23 weist als Azimutwinkel die Werte $\Phi_1$ und $180+\Phi_1$ und als Beugungswinkel den Wert $\alpha$ auf. Am zweiten Beugungsgitter wird das Licht 4, das im Fleck 6 auf die Markierspur 17 auffällt, unter dem zweiten Azimutwinkelpaar $\Phi_2$ und $180+\Phi_2$ und unter dem Beugungswinkel $\beta$ gebeugt.

Vorteilhaft unterscheiden sich die beiden Beugungsgitter nur in ihrem Azimutwinkel $\Phi_1$ bzw. $\Phi_2$. Beispielsweise weisen die beiden Beugungsgitter das gleiche symmetrische Reliefprofil mit der gleichen Gitterfrequenz auf, die das Licht 4 vorzugsweise in die erste Ordnung beugen. Die beiden Beugungswinkel $\alpha$ und $\beta$ sind daher gleich gross. Der Vorteil dieser Beugungsgitter liegt in der kostengünstigen Erzeugung einer Prägematrize für die Markierspur 17.

Mit Vorteil weist die Umgebung der Markierspur 17 eine diffus streuende, matte Oberfläche auf.

Die Lichtquelle 2 und die Detektoren 7 und 8 des Empfängers sind auf der gleichen Seite über der Folienbahn 5 angeordnet. Die Lichtquelle 2 befindet sich über der Folienbahn 5 und weist zwischen der Lichtquelle 2 und der Folienbahn 5 das optische Mittel 3 auf. Vorteilhaft wird monochromatisches Licht 4, das auf die Detektoren 7 und 8 abgestimmt ist, für das Abtasten verwendet, um die Selektivität des Spursensors 1 gegen Fremdlicht zu erhöhen.

Jeder Detektor 7 bzw. 8 ist im Empfänger unter einer durch die Beugungsgitter der Markierspur 17 vorbestimmten Einfallsrichtung 24 bzw. 25 angebracht. Vor der lichtempfindlichen Fläche jedes Detektors 7 bzw. 8 ist ein hier nicht gezeigter Kollimator oder eine andere optische Vorrichtung angeordnet, die vorteilhaft die Fremdlichtempfindlichkeit des Detektors 7 bzw. 8 herabsetzt.

Die Lichtquelle 2, das optische Mittel 3 und der Empfänger sind beispielsweise in einem Gehäuse untergebracht, das Fremdlicht vom Empfänger fernhält und somit die Empfindlichkeit der Detektoren 7 und 8 zusätzlich erhöht sowie der Verschmutzung des Spursensors 1 vorbeugt.

Das optische Mittel 3, z. B. eine Linsenanordnung, formiert das Licht 4 zum Strahl 22, der im Fleck 6 senkrecht auf die Ebene der Folienbahn 5 auftrifft. Vorteilhaft begrenzt eine hier nicht gezeigte Blende im optischen Mittel 3 den Fleck 6 auf eine vorbestimmte Flächenform von vorbestimmter Grösse. Der Fleck 6 ist homogen ausgeleuchtet und weist z. B. die Form eines Kreises oder eines Rechtecks auf. Das an den Beugungsgittern der Markierspur 17 gebeugte Licht 23 fällt auf den Detektor 7 bzw. 8, wenn es in die Einfallsrichtung 24 bzw. 25 gebeugt wird.

Mit Vorteil weisen die beiden symmetrisch zum Strahl 22 angeordneten Detektoren 7 und 8 einen gleichen vorbestimmten Abstand zur Folienbahn 5 auf.

Beispielsweise ist der Wert des Azimutwinkels $\Phi_1 = 135°$ bzw. $\Phi_2 = 225°$. Der Beugungswinkel $\beta$ der ersten Ordnung liegt im Bereich zwischen 30° und 60°. Mit diesen die Einfallsrichtung 24 bzw. 25 bestimmenden Winkeln ist der Aufbau des Spursensors 1 sehr einfach und die Empfindlichkeit des Detektors 7 bzw. 8 auf anderes Licht als am vorbestimmten Beugungsgitter gebeugten mimimal.

Lichtleiter für das optische Mittel 3 und für die Kollimatoren der Detektoren 7 und 8 verringern den Platzbedarf des Spursensors 1 vorteilhaft. Der eine Lichtleiter führt das Licht 4 von der Lichtquelle 2 bis einige Millimeter über den Fleck 6 und die andern sammeln das gebeugte Licht 23 in den Einfallsrichtungen 24 und 25 etwa im gleichen Abstand und leiten es zu den entsprechenden Detektoren 7 und 8. Sind die Lichtleiter flexibel, ist der Spursensor 1 in einen Lesekopf und einen Wandlerteil aufteilbar, die unabhängig voneinander, aber mittels der Lichtleiter verbunden, montierbar sind. Im Lesekopf sind nur die einen Enden der Lichtleiter zum Abtasten der Markierspur 17 fest angeordnet. Der Wandlerteil enthält die Lichtquelle 2, das optische Mittel 3 und die Detektoren 7 und 8, mit denen die andern Enden der Lichtleiter verbunden sind, und ist z. B. im Gehäuse der Messeinrichtung 10 untergebracht.

Die Messeinrichtung 10 kann in der Digitaltechnik oder mit Mitteln der analogen Technik ausgeführt sein.

Der Strahl 22 beleuchtet im Fleck 6 (Figur 3) einen ersten Flächenanteil 26 des Beugungsgitters in der ersten Beugungsgitterspur 19 bzw. einen zweiten Flächenanteil 27 in der zweiten Beugungsgitterspur 20. Wird während des Umrollens die Folienbahn 5 mit der Markierspur 17 in der Bahnrichtung 15 bewegt, verschiebt sich der Fleck 6 auf der Markierspur 17 entgegengesetzt zur Bahnrichtung 15, wobei immer neue Flächenanteile 26 und 27 beleuchtet werden.

Weicht während des Umrollens die Folienbahn 5 seitlich aus, verändert sich das Verhältnis der im Fleck 6 beleuchteten Flächenanteile 26 und 27. Verschiebt sich beispielsweise die Folienbahn 5 in die Seitenrichtung 14, d. h. die Abweichung y ist positiv, so verschiebt sich der Fleck 6 derart, dass sich der erste Flächenanteil 26 auf Kosten des zweiten Flächen anteils 27 vergrössert. Für negative Abweichungen y wächst der zweite Flächenanteil 27 auf Kosten des ersten Flächenanteils 26. Bei grossen Abweichungen y bzw. -y beleuchtet der Fleck 6 nur noch einen Flächenanteil 26 bzw. 27 der Beugungsgitterspur 19 bzw. 20. In der idealen Mittenlage der Folienbahn 5 sind beide Flächenanteile 26 und 27 gleich gross.

Proportional zu den Flächenanteilen 26, 27 verändern sich die Intensitäten des gebeugten Lichts 23 (Figur 1) in den Einfallsrichtungen 24 und 25, wenn die Beugungsgitter den gleichen Wirkungsgrad haben.

Der Detektor 7 wandelt das in der ersten Einfallsrichtung 24 und der Detektor 8 das in der zweiten Einfallsrichtung 25 gebeugte Licht 23 proportional in elektrische Empfangssignale E (Figur 4) um, die eine Stärke $I_1$ bzw. $I_2$ aufweisen. Für negative Abweichungen y ist $I_2 > I_1$, in der Mittenlage, die hier mit y=0 eingezeichnet ist, sind $I_1$ und $I_2$ gleich gross und für positve Abweichungen y ist $I_1 > I_2$.

Die Empfangssignale E jedes Detektors 7 bzw. 8 (Figuren 1 und 4) werden in der Messeinrichtung 10 in getrennten Verstärkern verstärkt. Der Verstärkungsfaktor ist bei wenigstens einem der Verstärker einstellbar. Dies weist den Vorteil auf, dass die unterschiedlichen Wirkungsgrade der Beugungsgitter und der Detektoren 7 und 8 ausgeglichen werden und die Mittenlage der Folienbahn 5 einstellbar ist.

Die Rechnereinheit 11 der Messeinrichtung 10 verarbeitet die Empfangssignale E und bildet ein Differenzsignal $D = I_2 - I_1$ (Figuren 1, 4 und 5), das daher von der Beleuchtungsstärke im Fleck 6 und dem Wirkungsgrad der Beugungsgitter weitgehend unabhängig ist. Der Spursensor 1 ist daher nur auf das gebeugte Licht 23 empfindlich.

Das Differenzsignal D weist bei einer Abweichung y = 0 einen Nulldurchgang 28 auf. Für y < 0 ist das Differenzsignal D > 0 und für y > 0 ist D < 0. Die Messeinrichtung 10 (Figuren 1, 3 und 5) erkennt am Vorzeichen von D, in welcher Seitenrichtung 14 der Fleck 6 zu verschieben ist, um den Betrag der Abweichung y zu verkleinern.

Das Differenzsignal D wird mit Vorteil normiert:

$$D = \frac{I_2 - I_1}{I_2 + I_1}. \quad \text{(Formel 1)}$$

Das normierte Differenzsignal D weist daher den Betrag von 1 auf, wenn bei einer Abweichung $y_R$ bzw $-y_R$ der Flächenanteil 26 bzw. 27 verschwindet und der Fleck 6 nur noch ein einziges Beugungsgitter beleuchtet. Wandert der Fleck 6 weiter aus der Markierspur 17 heraus, verkleinert sich der Flächenanteil 26 bzw. 27 des einzig beleuchteten Beugungsgitters im Fleck 6 und die Intensität des gebeugten Lichtes 23 nimmt bis auf die Intensität des Fremdlichtes ab. Der Betrag des Differenzsignals D verringert sich gleichfalls und erreicht den Wert Null, sobald der Fleck 6 bei einer maximalen Abweichung +y bzw. -y ausserhalb der Markierspur 17 auf die Folienbahn 5 fällt. Jede maximale Abweichung y ist die Summe aus der Abmessung des Flecks 6 quer zur Markierspur 17 und der Breite der Beugungsgitterspur 19 bzw. 20.

Die maximalen Werte der Abweichung y bzw. -y bestimmen zusammen einen Fangbereich der Messanordnung bzw. der Steuerung der Umrollanlage, während ein ausnutzbarer Regelbereich der Messanordnung durch die Werte $-y_R$ und $y_R$ der Abweichung begrenzt ist.

Der Nulldurchgang 28 des Differenzsignals D bestimmt die seitliche Lage der Folienbahn 5 und ist durch Verändern der Verstärkungsfaktoren der Verstärker in der Messeinrichtung 10 in der Seitenrichtung 14 verschiebbar und ermöglicht ein genaues Einrichten der Umrollanlage in der Seitenrichtung 14.

Das Differenzsignal D wird in der Recheneinheit 11 vorteilhaft mit einem oberen Grenzwert OG und mit einem unteren Grenzwert UG verglichen. Solange das Differenzsignal D zwischen den beiden Grenzwerten OG und UG liegt, erscheint am Ausgang 12 kein Korrektursignal 13. Ueberschreitet das Differenzsignal D den oberen Grenzwert OG bzw. unterschreitet es den unteren Grenzwert UG, so werden über den Ausgang 12 Korrektursignale 13 an die Steuereinrichtung der Umrollanlage geschickt. Die Korrektursignale 13 dienen der Steuereinrichtung als Anweisungen zum Steuern der Umrollanlage und bewirken ein Verschieben der Folienbahn 5 relativ zum Strahl 22 in der Seitenrichtung 14, um die Folienbahn 5 wieder in die Mittenlage zurückzusteuern.

Die beiden Grenzwerte OG und UG werden aus dem Speicher 11a abgerufen. Sie bestimmen die Toleranz der Steuerung und sind beim Einrichten der Umrollanlage auf bekannte Weise im Speicher 11a auf vorbestimmte Werte eingestellt und dort gespeichert worden.

Die Ausgestaltung der Uebertragung der Korrektursignale 13 hängt von der nachgeschalteten Steuereinrichtung der Umrollanlage ab und liegt im Kenntnisbereich des Fachmanns. Beispielsweise weist im Fall D > OG das Korrektursignal 13 eine positive und für D < UG eine negative Polarität auf. Denkbar sind unter anderem auch zwei Kanäle am Ausgang 12, wobei das Korrektursignal 13 auf einem der beiden Kanäle erscheint, je nachdem, ob D > OG bzw. D < UG.

In einer anderen Ausführung wird der Steuereinrichtung direkt das verstärkte Differenzsignal D zugeführt, wobei die Steuerung durch die Mittenlage stetig erfolgt.

Die Intensität des an den Beugungsgittern der Markierspur 17 gebeugten Lichts 23 (Figuren 1 und 2) beträgt ein Mehrfaches der Intensität des an der ungeprägten Folienbahn 5 oder an deren matten Oberfläche gestreuten Lichts 4. Der Spursensor 1 empfängt daher vorzugsweise nur das gebeugte Licht 23, auf das er empfindlich ist. Dies ist bei der Verarbeitung von Folien von Vorteil, da der Spursensor 1 das an der Markierspur 17 gebeugte Licht 23 richtig analysiert, auch wenn die Folienbahn 5 für das Licht 4 transparent, farbig oder beispielsweise mit einer spiegelnden Schicht überzogen ist.

Der Fangbereich und der Regelbereich der Messanordnung liegen vorteilhaft symmetrisch zur idealen Mittenlage. Beide Beugungsgitterspuren 19 und 20 sind gleich breit und die Markierspur 17 ist wenigstens so breit wie die Abmessung des Flecks 6. Vorteilhaft weist der Fleck 6 die Form eines Rechtecks auf, dessen Längsseite der Breite der Markierspur 17 entspricht, da der Verlauf des Differenzsignals D im ganzen Regelbereich linear ist. Für eine Abweichung y = 0 liegt der gedachte Schnittpunkt der beiden Diagonalen dieses Recktecks genau auf der gemeinsamen Längsseite der beiden Beugungsgitterspuren 19, 20.

Die Länge der Sektionen und die Grösse des ungeprägten Zwischenraumes 21 längs der Markierspur 17 sind durch die Prägematrize und das Prägeverfahren vorbestimmt, wobei die Länge einer Sektion sowohl ein Vielfaches der Breite der Markierspur 17 als auch ein Mehrfaches des Zwischenraumes 21 beträgt. Alle Sektionen sind mit Vorteil gleich lang, damit die Markierspur 17 kostengünstig mit einer einzigen Prägematrize erzeugbar ist.

In einer Ausgestaltung der Markierspur 17 beträgt ihre Breite beispielsweise 3,6 mm, wobei jede der beiden Beugungsgitterspuren 19 und 20 gleich breit ist. Jede Sektion der Markierspur 17 weist eine Länge von 26 mm bei einem Zwischenraum 21 von 2,9 mm auf.

Der in der Seitenrichtung 14 nutzbare Regelbereich der Messanordnung beträgt beim Einsatz des oben beschriebenen rechteckförmigen Flecks 6 somit ± 1,8 mm und bei einem kreisförmigen Fleck 6 von 1,4 mm Durchmesser ± 1,3 mm.

Die Umrollanlage zieht die Folienbahn 5 mit Geschwindigkeiten von mehr als 1 m/s unter dem Spursensor 1 durch und regelt die Lage der beispielsweise 600 mm breiten Folienbahn auf Bruchteile eines Millimeters genau in bezug auf die Markierspur 17. Bei so breiten Folienbahnen 5 wird die Markierspur 17 vorteilhaft in der Mitte angeordnet, damit der Fehler durch ein bei der Verarbeitung mögliches Schrumpfen der Folie halbiert wird. Beispielsweise beträgt dieser Fehler bei einer Schrumpfung der Folienbahn von 1% und bei deren Breite von 600 mm zwischen den beiden Kanten 18 gemessen 0,6 mm.

Bei sehr breiten Folienbahnen 5 sind mehrere parallele Markierspuren 17 vorteilhaft, wobei beispielsweise die eine der Markierspuren 17 zum Steuern der Lage der Folienbahn 5 dient und die übrigen Markierspuren 17 mittels separater Messanordnungen die hier nicht gezeigten Mittel einer Folgeoperation genau den Mustern 16 nachführen. Die übrigen Markierspuren 17 ermöglichen nach einer Unterteilung der Folienbahn 5 in schmalere Teilbänder ein genaues Nachbearbeiten der Teilbänder.

In einer anderen Ausführung des Spursensors 1 sind die Lichtquelle 2 und das optische Mittel 3 auf der ungeprägten Seite der transparenten Folienbahn 5 und der Empfänger auf der geprägten Seite angeordnet. Der Strahl 22 durchdringt die Folienbahn 5 und wird an den Beugungsgittern der Markierspur 17 erst beim Austritt aus der Folienbahn 5 gebeugt. Das gebeugte Licht 23 fällt in die Detektoren 7 und 8.

Mit Vorteil wird die Fremdlichtempfindlichkeit des Empfängers durch Verwendung von moduliertem Licht 4 herabgesetzt. Beispielsweise moduliert die Lichtquelle 2 oder das optische Mittel 3 die Intensität des Lichts 4 im Strahl 22. Die Empfangssignale E enthalten neben unmodulierten Fremdlichtanteilen ein vom modulierten gebeugten Licht 23 erzeugtes Modulationssignal. Die Verstärker für die Empfangssignale E verstärken selektiv das Modulationssignal, wobei in den Empfangssignalen E die Fremdlichtanteile unterdrückt werden.

In einer vorteilhaften Ausführung erzeugt die Recheneinheit 11 der Messeinrichtung 10 (Figur 1) Hilfssignale, beispielsweise ein Zusatzsignal und ein Spursignal, sobald der Strahl 22 keine der Beugungsgitterspuren 19 und 20 beleuchtet, d. h. der Strahl 22 die Markierspur 17 verlassen hat. Dabei tritt ein Verlust der beiden Empfangssignale E auf bzw. die Stärke $I_1$ bzw. $I_2$ der beiden Empfangssignale E sinken auf die Werte für gestreutes Licht 4 ab. Mit Vorteil wird das Verlassen der Markierspur 17 durch ein Absinken der Summe aus den Stärken $I_1$ und $I_2$ der beiden Empfangssignale E unter einen vorbestimmt einstellbaren Pegel L festgelegt. Der Pegel L liegt über der Summe aus den Stärken $I_1$ und $I_2$ der beiden Empfangssignale E für gestreutes Licht 4. Die Hilfssignale werden auf einer hier nicht gezeigten Anzeigetafel der Messeinrichtung 10 dargestellt.

Befindet sich die Messanordnung im Regelbereich, wenn sie den Verlust der beiden Empfangssignale E registriert, wird das Zusatzsignal abgegeben. Diese Bedingung ist erfüllt, wenn der Strahl 22 auf den Zwischenraum 21 zwischen aufeinanderfolgenden Sektionen der Markierspur 17 fällt.

Das Spursignal wird erzeugt, wenn der Verlust der beiden Empfangssignale E beim Verlassen des Fangbereichs eingetreten ist. Da beim Verlassen des Fangbereiches das Vorzeichen des Differenzsignals D nicht wechselt, zeigt die Messanordnung vorteilhaft auch die Seitenrichtung 13 der Abweichung y an.

Um ein Einrichten der Umrollanlage zu erleichtern, weist die Anzeigetafel der Messeinrichtung 10 vorteilhaft eine optische Anzeige des Differenzsignals D auf. Sie zeigt beispielsweise im Regelbereich der Messanordnung direkt die Abweichung y in Längenmasseinheiten (z. B. μm] und im Fangbereich die Seitenrichtung 14 bzw. das Vorzeichen der Abweichung y an. Die beiden Hilfssignale weisen z. B. mittels Anzeigelampen auf den Verlust der Empfangssignale E und auf die Richtung des Abwanderns des Flecks 6 von der Markierspur 17 hin.

Das Zusatzsignal wird vorteilhaft der Steuereinrichtung der Umrollanlage übermittelt und blockiert die Steuerung solange, bis sich der Fleck 6 über einen Zwischenraum 21 in der Markierspur 17 bewegt hat und bis der Fleck 6 wieder die nächste Sektion der Markierspur 17 beleuchtet. Eine weitere Verwendung ist die Signalisation des Beginns einer neuen Periode der Muster 16.

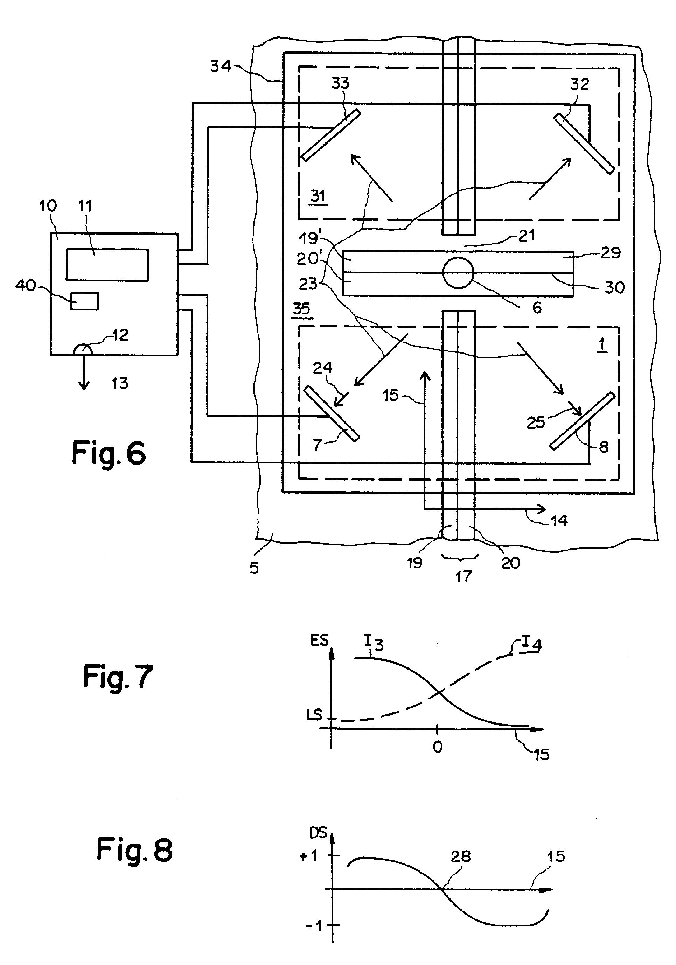

Soll die volle Genauigkeit der Messanordnung zur Signalisation des Beginns einer neuen Periode der Muster 16 ausgenützt werden, werden mit Vorteil auf der Folienbahn 5 an den vorbestimmten Stellen zusätzliche Markierungen 29 (Figur 6) gleichzeitig mit der Markierspur 17 eingeprägt. Jede dieser Markierungen 29 besteht aus zwei benachbarten, beugungsoptisch unterschiedlichen Beugungsgitterspuren 19' und 20', wobei eine gemeinsame Grenze 30 der beiden Beugungsgitterspuren 19' und 20' senkrecht zur Markierspur 17 liegt. Mit Vorteil unterscheiden sich die beiden Beugungsgitter der Markierung 29 beispielsweise nur in der Gitterfrequenz von den Beugungsgittern der Markierspur 17.

Die Markierungen 29 sind in Abständen vorzugsweise neben der Markierspur 17 oder in den Zwischenräumen 21 angeordnet, wobei die Folienbahn 5 in einer Spur der Markierungen 29 keine weiteren Prägungen aufweist. Damit auf der Folienbahn 5 möglichst wenig Platz für die zusätzlichen Markierungen 29 verloren geht, sind sie vorteilhaft in den Zwischenräumen 21 der Markierspur 17 eingeprägt. Die Markierung 29 besitzt beispielsweise in der Seitenrichtung 14 eine Länge von 10 mm und in der Bahnrichtung 15 eine Breite von 3,6 mm, d. h. beide Beugungsgitterspuren 19' und 20' weisen je eine Fläche von 10 mm mal 1,8 mm auf.

In der Umrollanlage ist zusätzlich zum Spursensor 1 ein bis auf die Einfallsrichtungen 24 und 25 identischer zweiter Spursensor, nämlich ein Markensensor 31, zum Abtasten der Markierungen 29 angeordnet, wobei Detektoren 32 und 33 des Empfänger des Markensensors 31 auf die Eigenschaften der beiden Beugungsgitter der Markierungen 29 ausgerichtet sind.

In der Figur 6 liegt der Fleck 6 genau auf der Grenze 30. In einer vorteilhaften Ausführung sind die Detektoren 7 und 8 des Spursensors 1 und die Detektoren 32 und 33 des Markensensors 31 im Grundriss symmetrisch zur Grenze 30 und um den Fleck 6 angeordnet. Ein einziger Strahl 22 (Figur 1), der aus dem Licht 4 einer einzigen Lichtquelle 6 mittels des optischen Mittels 3 geformt ist, beleuchtet im Fleck 6 beim Umrollen der Folienbahn 5 nacheinander die Sektionen der Markierspur 17 und die Markierungen 29. Die Beugungsgitter der Markierspur 17 beugen das Licht unter dem Beugungswinkel α und die Beugungsgitter der Markierungen 29 um den Beugungswinkel β, wobei das unter dem Beugungswinkel α gebeugte Licht 23 wegen der Kollimatoren nicht in die Detektoren 32 und 33 und das unter Beugungswinkel β gebeugte Licht 23 nicht in die Detektoren 7 und 8 fallen kann.

Ein gemeinsames Sensorgehäuse 34 umschliesst beispielsweise den Spursensor 1, den Markensensor 31 und den einzigen Strahl 22 mit den Mitteln 2 und 3 zu seiner Erzeugung und bildet so einen Kombisensor 35.

Die Aufteilung in den Lesekopf und in den Wandlerteil, die beide mittels Lichtleitern verbunden sind, ist auch für den Kombisensor vorteilhaft, wobei entsprechend den vier Detektoren 7, 8, 32 und 33 vier Lichtleiter um den Lichtleiter für die Beleuchtung des Flecks 6 anzuordnen sind.

Der Fleck 6 weist beispielsweise die Form eines Quadrates mit einer Seitenlänge von 3,6 mm auf, wobei dessen Seiten auf die Markierspur 17 und auf die Markierungen 29 ausgerichtet sind.

Der Markensensor 31 ist ebenfalls an die Messeinrichtung 10 angeschlossen und übermittelt ihr Empfangssignale ES (Figur 7) der Detektoren 32 und 33. Die Recheneinheit 11 berechnet ein Differenzsignal DS (Figur 8) aus den Stärken $I_3$ und $I_4$ der Empfangssignale ES entsprechend der Formel 1. Beim Umrollen rückt der Fleck 6 in der Bahnrichtung 15 gegen die Markierung 29 vor und, sobald der Fleck 6 eine der Beugungsgitterspuren 19′, 20′ der Markierung 29 beleuchtet und die Summe der Stärken $I_3$ und $I_4$ der Empfangssignale ES einen vorbestimmt eingestellten Pegel LS überschreiten, weist das Differenzsignal DS einen beispielsweise positiven Wert auf. Die Messeinrichtung 10 gibt ein Synchronisationssignal ab, wenn der Fleck 6 genau gleiche Anteile der beiden Beugungsgitter der Markierung 29 beleuchtet bzw. wenn der Nulldurchgang 28 des Differenzsignals DS von der Recheneinheit 11 ermittelt wird.

Die Recheneinheit 11 erzeugt auch für den Markensensor 31 die entsprechenden Hilfssignale wie für den Spursensor 1 und bringt sie ebenfalls auf der Anzeigetafel der Messeinrichtung 10 als Einrichtungshilfe zur Anzeige.

Eine durch den Nulldurchgang 28 des Differenzsignals DS bestimmte Position der Markierung 29 ist ebenfalls durch Verändern des Verstärkungsfaktors für die Empfangssignale ES in der Messeinrichtung 10 in der Bahnrichtung 15 verschiebbar und ermöglicht eine genaues Einrichten der Umrollanlage in der Bahnrichtung 15.

Die Ermittlung der Lage der Markierspur 17 bzw. der Position der Markierung 29 auf der Folienbahn 5 mittels des Nulldurchgangs 28 erfolgt auf einige Mikrometer genau. Ist die Folienbahn 5 z. B. als Heissprägefolie mit Mustern 16 ausgebildet, ermöglicht diese Messanordnung eine genaue Bestimmung des Lage des Musters 16 und daher ein hoch präzises Uebertragen der Muster 16 an einen vorbestimmten Ort auf einem hier nicht gezeigten Träger.

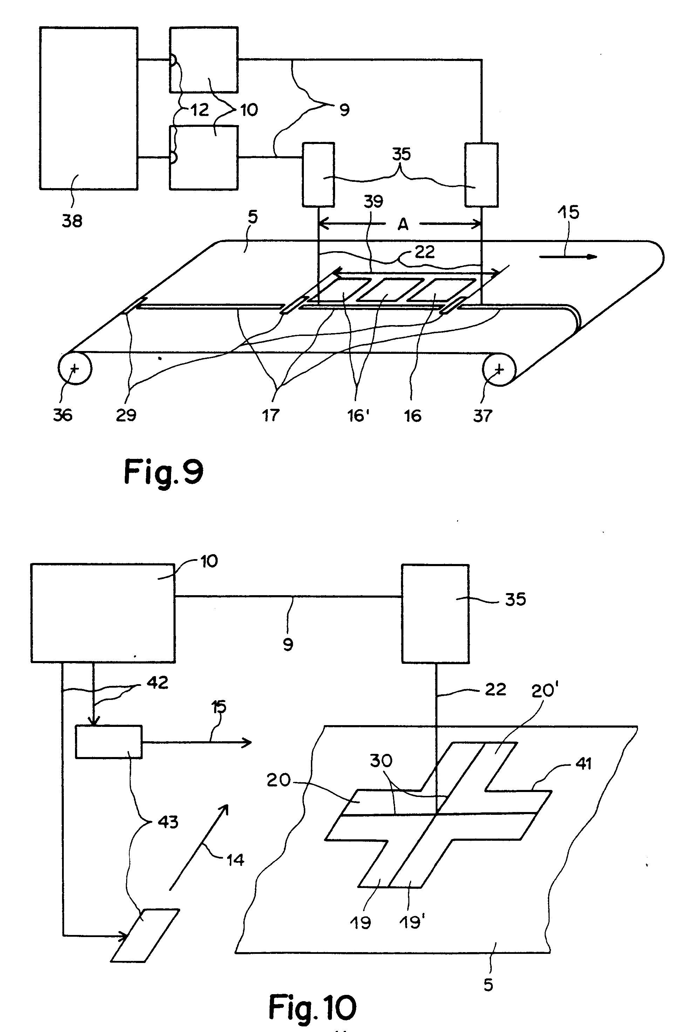

Eine Umrollanlage weist vorteilhaft zwei Kombisensoren 35 (Figur 9) auf. Die Folienbahn 5 wird von einer Abgaberolle 36 auf eine Aufnahmerolle 37 in der Bahnrichtung 15 umgerollt und gestreckt unter den Kombisensoren 35 vorbeigezogen, deren Strahlen 22 in einem vorbestimmten Abstand A angeordnet sind und nacheinander die gleichen Sektoren der Markierspur 17 und die gleichen Markierungen 29 abtasten. Jeder Kombisensor 35 ist über Leitungen 9 mit seiner Messeinrichtung 10 verbunden, deren Ausgang 12 an ein Auswertegerät 38 der Steuereinrichtung der Umrollanlage angeschlossen ist.

Das Auswertegerät 38 errechnet aus dem Abstand A und aus der Zeitdifferenz zwischen den beiden Synchronisationssignalen, die es von den Messeinrichtungen 10 erhält, jeweils einen genauen Istwert für eine Distanz 39 zwischen zwei aufeinanderfolgenden aequidistanten Markierungen 29. Dieser Istwert wird mit einem gespeicherten vorbestimmten Sollwert verglichen. Auf Grund des Ergebnis dieses Vergleichs verändert das Auswertegerät 38 in der Steuereinrichtung der Umrollanlage die Wirkung einer hier nicht gezeigten Ablaufbremse, die auf die Abgaberolle 36 wirkt, wobei die Spannung in der Folienbahn 5 beim Umrollen so verändert wird, dass die Distanz 39 wegen der variablen Foliendehnung dem Sollwert exakt entspricht. Diese Einrichtung ist von Vorteil, wenn zwischen den Markierungen 29 mehrere Muster 16 bis 16′ vorhanden sind und die nachfolgenden Muster 16′ mit der gleichen Genauigkeit lokalisiert werden müssen wie das unmittelbar bei der Markierung 29 gelegene Muster 16.

Die Messeinrichtung 10 (Figur 6) weist vorteilhaft wenigstens einen Zähler 40 auf, der von den Empfangssignalen E bzw. ES abgeleitete Ereignisse abzählt und dessen Zählerstand auf der Anzeigetafel der Messeinrichtung 10 abgelesen werden kann. Der Zähler 40 ermittelt beispielsweise aus den Zusatzsignalen die Anzahl der vom Spursensor 1 ermittelten Zwischenräume 21 bzw. aus den Synchronisationssignalen die Anzahl der vom Markensensor 31 registrierten Markierungen 29. Der Zählerstand ist in beiden Beispielen proportional zur Anzahl der Muster 16.

Beim Umrollen gibt die mit einem Kombisensor 35 verbundene Messeinrichtung 10 die Hilfssignale, das Korrektursignal 13, den Zählerstand und das Synchronisierignal über den Ausgang 12 ab. Das Auswertegerät 38 (Figur 9) wertet alle diese Signale aus. Beispielsweise wird der Zählerstand laufend mit einer vorbestimmt eingestellten, im Auswertegerät 38 gespeicherten Nummer verglichen und die Differenz beim Unterschreiten eines vorbestimmten Wertes als Bremssignal für einen Antrieb der Rollen 36 und 37 interpretiert, um die Folienbahn 5 auf das Synchronisiersignal hin anzuhalten, damit der Strahl 22 auf einer vorbestimmten Markierung 29 stehenbleibt.

In einer vorteilhaften Weiterbildung des Zählers 40 (Figur 6) wird eine Einheit zum gespeicherten Zählerstand addiert, wenn das Synchronisationssignal beim Nulldurchgang 28 von positiven zu negativen Werten des Differenzsignals DS erzeugt wird. Hingegen wird der Zählerstand um eine Einheit vermindert, wenn der Nulldurchgang 28 von negativen zu positiven Werten erfolgt, wie dies beim Rückwärtslaufen der Umrollanlage z. B. beim Einrichten der Fall ist.

Die Recheneinheit 11 (Figur 6) ermittelt vorteilhaft aus der zeitlichen Veränderung des Zählerstandes die Geschwindigkeit der Folienbahn 5, wenn sich die Zwischenräume 21 bzw. die Markierungen 29 aequidistant auf der Folienbahn 5 folgen und der vorbestimmte Wert der Distanz 39 in der Messeinrichtung 10 gespeichert ist. Damit ist die Messanordnung zusätzlich als Tachometer der Umrollanlage verwendbar. Enthält die Messanordnung wenigstens einen Markensensor 31, ist gleichzeitig mit der Geschwindigkeit auch die Bahnrichtung 15 bestimmbar.

Der Kombisensor 35 (Figuren 5, 8 und 10) ist auch als Positioniereinrichtung zum Suchen einer Zielmarke 41 einsetzbar. Der Kombisensor 35 ist mittels der Leitung 9 mit der Messeinrichtung 10 verbunden, die aus den Differenzsignalen D und DS Richtungssignale 42 ermittelt und sie an zwei Antriebe 43 weiterleitet. Die Antriebe 43 erzeugen eine relative Bewegung in der Seitenrichtung 14 und in der Bahnrichtung 15 zwischen dem Kombisensor 35 und der Folienbahn 5 oder allgemein einer ebenen Fläche und positionieren den Strahl 22 auf der Zielmarke 41. Die Antriebe 43 wirken auf die Rollen der Umrollanlage oder führen den Kombisensor 35 parallel über die Folienbahn 5. Die Messeinrichtung 10 führt den Fleck 6 so lange auf einem vorbestimmten Suchweg über die Folienbahn 5, bis der Kombisensor 35 gebeugtes Licht 23 von der Zielmarke 41 empfängt. Anschliessend wird der Strahl 22 mittels der Antriebe 43 auf den Mittelpunkt der Zielmarke 41 zentriert.

Die Zielmarke 41 setzt sich beispielsweise aus wenigstens einer Markierung 29 (Figur 6) und wenigstens einer Sektion der Markierspur 17 zusammen, die in Kreuzform auf der Folienbahn 5 eingeprägt sind.

Die Beugungsgitterspuren 19, 19′, 20 und 20′ (Figur 10) sind beispielsweise so eingeprägt, dass die gemeinsamen Grenzen 30 ein Kreuz bilden und die Zielmarke 41 symmetrisch teilen.

Die Zielmarke 41 ist vorteilhaft auch eine Kreisfläche mit vier gleich grossen Sektoren, die sich im Beugungsgitter unterscheiden.

Statt die Zielmarke 41 direkt in die blattförmige Fläche oder Folienbahn 5 einzuprägen, ist die Verwendung von aufgeklebten Etiketten denkbar, die solche Zielmarken 41 tragen.

## Patentansprüche

1. Anordnung zur Messung der Abweichung einer Markierspur einer Folienbahn von einer Mittellage, mit einem aus einer Lichtquelle und Zwei lichtemfindlichen Detektoven (7; 8) bestehenden Spursensor und mit einer an den Spursensor angeschlossenen Messeinrichtung, die eine Recheneinheit (11) zum Umwandeln der von den beiden Detektoren (7; 8) erzeugten Empfangssignale (E) in ein Differenzsignal (D) aufweist, wobei die Folienbahn und der Spursensor relativ zueinander bewegbar sind, dadurch gekennzeichnet, dass die Markierspur (17) aus zwei zueinander parallelen, beugungsoptisch unterschiedlichen Beugungsgitterspuren (19; 20) besteht, dass die Lichtquelle (2) ein optisches Mittel (3) zum Beleuchten der Markierspur (17) in einem Fleck (6) vorbestimmter Grösse aufweist und dass die zwei lichtempfindlichen Detektoren (7; 8) so angeordnet sind, dass jeder Detektor (7; 8) im beleuchteten Fleck (6) gebeugtes Licht (23) einer vorbestimmten Beugungsordnung der einen der beiden Beugungsgitterspuren (19; 20) empfängt.

2. Anordnung nach Anspruch 1, dadurch gekennzeichnet, dass die Messeinrichtung (10) für die Empfangssignale (E) der Detektoren (7; 8) zwei getrennte Verstärker umfasst und dass wenigstens einer der Verstärker zum Einstellen einer Mittenlage der Folienbahn (5) einen einstellbaren Verstärkungsfaktor aufweist.

3. Anordnung nach Anspruch 1 oder 2, dadurch gekennzeichnet das die Lichtquelle (2) oder das optische Mittel (3) zum Modulieren des Lichtes (4) vorgesehen ist und dass die Verstärker der Messeinrichtung (10) zum selektiven Verstärken eines Modulationssignals in den Empfangssignalen (E) eingerichtet sind.

4. Anordnung nach einem der Ansprüche 1 bis 3, dadurch gekennzeichnet, dass die Recheneinheit (11) mit einem Speicher (11a) verbunden ist und zum Erzeugen von Korrektursignalen (13) beim Ueberschreiten des Differenzsignal (D) über einen oberen Grenzwert (OG) bzw. beim Unterschreiten des Differenzsignals (D) unter einen unteren Grenzwert (UG) und zum Eingeben der vorbestimmten Grenzwerte (UG; OG) ausgebildet ist.

5. Anordnung nach einem der Ansprüche 1 bis 5, dadurch gekennzeichnet, dass die Einfallsrichtung (24; 25) des gebeugten Lichts (23) einen Azimutwinkel ($\Phi_1$; $\Phi_2$) von 135° bzw.225° und einen Beugungswinkel ($\alpha$;

β) aus dem Bereich von 30° bis 60° aufweist.

6. Anordnung nach einem der Ansprüche 1 bis 5, dadurch gekennzeichnet, dass das Licht (4) monochromatisch ist.

7. Anordnung nach einem der Ansprüche 1 bis 6, dadurch gekennzeichnet, dass die Recheneinheit (11) zur Bildung eines Differenzsignals (D) aus dem Quotienten

$$D = \frac{I_2 - I_1}{I_2 + I_1}$$

ausgebildet ist, wobei $I_1$ die Stärke des Empfangssignals (E) des einen Detektors (7) und $I_2$ die Stärke des Empfangssignals (E) des anderen Detektors (8) bedeutet.

8. Anordnung nach einem der Ansprüche 1 bis 7, dadurch gekennzeichnet, dass auf der Folienbahn (5) mindestens eine optische Markierung (29) angeordnet ist, die zwei benachbarte, beugungsoptisch unterschiedliche Beugungsgitter aufweist, wobei die gemeinsame Grenze (30) der beiden Beugungsgitter senkrecht zur Markierspur (17) liegt, und dass ein Markensensor (31) vorhanden ist, der aus einer Lichtquelle (2), einem optischen Mittel (3) zur Beleuchtung eines Flecks (6) des Beugungsgitters und aus einem optischen Empfänger mit zwei weiteren lichtempfindlichen Detektoren (32; 33) besteht, die so angeordnet sind, dass jeder Detektor (32; 33) im beleuchteten Fleck (6) gebeugtes Licht (23) einer vorbestimmten Beugungsordnung des einen der beiden Beugungsgitter empfängt, dass die beiden weiteren Detektoren (32; 33) mit der Messeinrichtung (10) verbunden sind und dass die Recheneinheit (11) zum Umwandeln der von den beiden weiteren Detektoren (32; 33) erzeugten Empfangssignale (ES) in ein zweites Differenzsignal (DS) und zur Abgabe eines Synchronisiersignals in einem Nulldurchgang (28) des zweiten Differenzsignals (DS) ausgebildet ist.

9. Anordnung nach Anspruch 8, dadurch gekennzeichnet, dass der Spursensor (1) und der Markensensor (31) in ein gemeinsames Sensorgehäuse (34) eines Kombisensors (35) eingebaut sind und dass den beiden Sensoren (1; 31) des Kombisensors (35) eine einzige Lichtquelle (2) sowie ein einziges optisches Mittel (3) gemeinsam ist.

10. Anordnung nach Anspruch 9, dadurch gekennzeichnet, dass die Markierspur (17) und die Markierung (29) gemeinsam eine Zielmarke (41) bilden und dass die Bewegung der Folienbahn (5) relativ zum Kombisensor (35) durch Richtungssignale (42), die in der Messeinrichtung (10) aus den Differenzsignalen (D; DS) erzeugt werden, derart steuerbar ist, dass der Strahl (22) des Kombisensors (35) selbsttätig in der Mitte der Zielmarke (41) positioniert wird.

11. Anordnung nach einem der Ansprüche 8 bis 10, dadurch gekennzeichnet, dass die Messeinrichtung (10) Mittel zum Erzeugen von Hilfssignalen beim Unterschreiten eines Pegels (L; LS) durch die Summe der Empfangssignale (E; ES) der Detektoren (7; 8, 32; 33) aufweist.

12. Anordnung nach einem der Ansprüche 8 bis 11, dadurch gekennzeichnet, dass die Messeinrichtung (10) einen Zähler (40) aufweist und dass der Zähler (40) zum Abzählen von Ereignissen eingerichtet ist, die in der Messeinrichtung (10) aus den Empfangssignalen (E) bzw. (ES) abgeleitet werden und die der Anzahl von Zwischenräumen (21) bzw. der Markierungen (29) proportional sind.

## Claims

1. An arrangement for measuring the deviation of a marking track of a foil web from a central position, having a track sensor comprising a light source and two photosensitive detectors (7; 8), and a measuring device rich is connected to the track sensor and rich has a computing unit (11) for conversion into a difference signal (D) of the reception signals (E) produced by the two detectors (7; 8), the foil web and the track sensor being movable relative to each other, characterised in that the marking track (17) comprises two mutually parallel diffraction grating tracks (19; 20) rich differ in respect of optical diffraction effect, that the light source (2) has an optical means ( 3) for illumination of the marking track (17) in a spot (6) of predetermined size and that the two photosensitive detectors (7; 8) are so arranged that each detector (7; 8) receives light (23) diffracted in the illuminated spot (6), of a predetermined order of diffraction of one of the two diffraction grating tracks (19; 20).

2. An arrangement according to claim 1 characterised in that the measuring device (10) includes two separate amplifiers for the reception signals (E) of the detectors (7; 8) and that at least one of the amplifiers has an adjustable gain factor for setting a central position of the foil web (5).

3. An arrangement according to claim 1 or claim 2 characterised in that the light source (2) or the optical means (3) is provided for modulation of the light (4) and that the amplifiers of the measuring device (10) are arranged for the selective amplification of a modulation signal in the reception signals (E).

4. An arrangement according to one of claims 1 to 3 characterised in that the computing unit (11) is connected to a memory (11a) and is designed to produce correction signals (13) when the difference signal (D) exceeds an upper limit value (OG) or when the difference signal (D) falls below a lower limit value (UG) and to input the predetermined limit values (UG; OG).

5. An arrangement according to one of claims 1 to 4 characterised in that the direction of incidence ( 24; 25 ) of the diffracted light ( 23 ) has an azimuth angle ($\Phi_1$; $\Phi_2$) of 135° and 225° respectively and a diffraction angle ($\alpha$; $\beta$) from the range of 30° to 60°.

6. An arrangement according to one of claims 1 to 5 characterised in that the light (4) is monochromatic.

7. An arrangement according to one of claims 1 to 6 characterised in that the computing unit (11) is designed to form a difference signal (D) from the quotient:

$$D = \frac{I_2 - I_1}{I_2 + I_1}$$

wherein $I_1$ denotes the strength of the reception signal (E) of the one detector (7) and $I_2$ denotes the strength of the reception signal (E) of the other detector (8).

8. An arrangement according to one of claims 1 to 7 characterised in that arranged on the foil web (5) is at least one optical marking (29) which has two adjacent diffraction gratings rich are different in respect of optical diffraction effect, wherein the common boundary (30) of the two diffraction gratings is perpendicular to the marking track (17), and that there is provided a mark sensor (31) rich comprises a light source (2), an optical means (3) for the illustration of a spot (6) of the diffraction grating and an optical receiver with two further photosensitive detectors (32; 33) rich are so arranged that each detector (32; 33) receives light (23) rich is diffracted in the illuminated spot (6), of a predetermined order of diffraction of one of the two diffraction gratings, that the two further detectors (32; 33) are connected to the measuring device (10) and that the computing unit (11) is designed to convert into a second difference signal (DS) the recept ion signals (ES) produced by the two further detectors (32; 33), and to output a synchronisation signal at a passage through zero (28) of the second difference signal (DS).

9. An arrangement according to claim 8 characterised in that the track sensor (1) and the mark sensor (31) are fitted into a common sensor housing (34) of a combination sensor (35) and that a single light source (2) and a single optical means (3) is common to the two sensors (1; 31) of the combination sensor (35).

10. An arrangement according to claim 9 characterised in that the marking track (17) and the marking (29) jointly form a target mark (41) and that the movement of the foil web (5) relative to the combination sensor (35) is so controllable by directional signals (42) rich are produced in the measuring device (10) from the difference signals (D; DS), that the beam (22) of the combination sensor (35) is automatically positioned in the centre of the target mark (41).

11. An arrangement according to one of claims 8 to 10 characterised in that the measuring device (10) has means for producing auxiliary signals when the sum of the reception signals (E; ES) of the detectors (7; 8, 32; 33) falls below a level (L; LS).

12. An arrangement according to one of claim 8 to 11 characterised in that the measuring device (10) has a counter (40) and that the counter (40) is designed to count off events rich are derived in the measuring device (10) from the reception signals (E) and (ES) respectively and which are proportional to the nuber of intermediate spaces (21) or markings (29).

## Revendications

1. Dispositif pour mesurer l'écart d'une piste de repérage d'une bande continue de film par rapport à une position centrale, avec un capteur de piste constitué d'une source lumineuse et de deux détecteurs photosensibles (7; 8), et avec un dispositif de mesure raccordé au capteur de piste et présentant une unité de calcul (11) pour transformer les signaux de réception (E) produits par les deux détecteurs (7; 8) en un signal différentiel (D), la bande continue de film et le capteur de piste étant mobiles l'un par rapport à l'autre, caractérisé en ce que la piste de repérage (17) est constituée de deux pistes à réseaux de diffraction (19; 20) parallèles entre elles et différentes en matière de diffraction optique, en ce que la source lumineuse (2) présente un moyen optique (3) pour éclairer la piste de repérage (17) en une tache (6) de taille prédéfinie, et en ce que les deux détecteurs photosensibles (7; 8) sont disposés de telle sorte que chaque détecteur (7; 8) reçoit de la lumière (23) d'un ordre de diffraction prédéfini, diffractée dans la tache éclairée (6), qui provient d'une des deux pistes à réseaux de diffraction (19; 20).

2. Dispositif selon la revendication 1, caractérisé en ce que le dispositif (10) de mesure des signaux de réception (E) des détecteurs (7; 8) comprend deux amplificateurs séparés, et en ce qu'au moins un des amplificateurs présente un facteur d'amplification réglable, afin de régler une position centrale de la bande continue de film (5).

3. Dispositif selon la revendication 1 ou 2, caractérisé en ce que la source lumineuse (2) ou le moyen optique (3) est conçu de manière à moduler la lumière (4), et en ce que les amplificateurs du dispositif de mesure (10) sont ajustés de manière à amplifier sélectivement un signal de modulation dans les signaux de réception (E).

4. Dispositif selon l'une des revendications 1 à 3, caractérisé en ce que l'unité de calcul (11) est reliée à une mémoire (11a) et conçue de manière à produire des signaux de correction (13) lorsque le signal différentiel (D) dépasse une limite supérieure (OG) ou sous-dépasse une limite inférieure (UG), et à introduire les limites prédéfinies (UG; OG).

5. Dispositif selon l'une des revendications 1 à 4, caractérisé en ce que la direction d'incidence respective (24 ou 25) de la lumière diffractée (23) présente un angle azimutal ($phi_1$ ou $phi_2$) de 135° ou 225° et un angle de diffraction ($\alpha$ ou $\beta$) compris entre 30° et 60°.

6. Dispositif selon l'une des revendications 1 à 5, caractérisé en ce que la lumière (4) est monochromatique.

7. Dispositif selon l'une des revendications 1 à 6, caractérisé en ce que l'unité de calcul (11) est conçue de manière à former un signal différentiel (D) à partir du quotient :

$$D = (I_2 - I_1)/(I_2 + I_1),$$

où $I_1$ est l'intensité du signal de réception (E) d'un (7) des détecteurs, et $I_2$ l'intensité du signal de réception (E) de l'autre détecteur (8).

8. Dispositif selon l'une des revendications 1 à 7, caractérisé en ce qu'au moins un marquage optique (29) est disposé sur la bande continue de film (5), marquage qui présente deux réseaux de diffraction voisins, différents en matière de diffraction optique, dont la limite commune (30) est perpendiculaire à la piste de repérage (17), et en ce qu'il est prévu un capteur de marquage (31), constitué d'une source lumineuse (2), d'un moyen optique (3) pour éclairer une tache (6) du réseau de diffraction et d'un récepteur optique présentant deux autres détecteurs photosensibles (32; 33), qui sont disposés de telle sorte que chaque détecteur (32; 33) reçoit de la lumière (23) d'un ordre de diffraction prédéfini, diffractée dans la tache éclairée (6), qui provient d'un des deux réseaux de diffraction, en ce que les deux autres détecteurs (32; 33) sont reliés au dispositif de mesure (10), et en ce que l'unité de calcul (11) est conçue de manière à transformer les signaux de réception (ES) produits par les deux autres détecteurs (32; 33) en un second signal différentiel (DS), et à délivrer un signal de synchronisation dans un passage par zéro (28) du second signal différentiel (DS).

9. Dispositif selon la revendication 8, caractérisé en ce que le capteur de piste (1) et le capteur de marquage (31) sont incorporés dans un boîtier commun (34) d'un capteur combiné (35), et en ce que les deux capteurs (1; 31) du capteur combiné (35) ont en commun une unique source lumineuse (2) et un unique moyen optique (3).

10. Dispositif selon la revendication 9, caractérisé en ce que la 5 piste de repérage (17) et le marquage (29) constituent conjointement un repère de cible (41), et en ce que le déplacement de la bande continue de film (5) par rapport au capteur combiné (35) peut, au moyen de signaux de direction (42) produits dans le dispositif de mesure (10) à partir des signaux différentiels (D; DS), être commandé de telle sorte que le rayon lumineux (22) du capteur combiné (35) est automatiquement positionné au centre du repère de cible (41).

11. Dispositif selon l'une des revendications 8 à 10, caractérisé en ce que le dispositif de mesure (10) présente des moyens pour produire des signaux secondaires lorsque la somme des signaux de réception (E; ES) des détecteurs (7; 8, 32; 33) sous-dépasse un niveau donné (L; LES).

12. Dispositif selon l'une des revendications 8 à 11, caractérisé en ce que le dispositif de mesure (10) présente un compteur (40), et en ce que le compteur (40) est ajusté de manière à décompter des événements, déduits des signaux de réception (E; ES) dans le dispositif de mesure (10), qui sont proportionnels au nombre d'espaces intermédiaires (21) ou encore de marquages (29).

# Fig. 1

# Fig. 2

# Fig. 3

# Fig.4

# Fig.5

Fig. 6

Fig. 7

Fig. 8

**Fig.9**

**Fig.10**